# EUROPÄISCHE PATENTANMELDUNG

(11) **EP 3 817 331 A1**
(43) Veröffentlichungstag der Anmeldung: **05.05.2021**
(21) Anmeldenummer: 19205822.0
(22) Anmeldetag: 29.10.2019
(51) Int. Cl.: H04L 29/08, H04W 4/38, H04W 52/02, H04W 84/18

(54) **STEUERUNG EINES SENSORNETZES MIT GRUPPIERTEN SENSORKNOTEN**

(71) Anmelder: Siemens Aktiengesellschaft, 80333 München (DE)
(72) Erfinder: Villnow, Michael, 90765 Fürth (DE); Bormann, Ulf, 90518 Altdorf (DE); Scheibner, Dirk, 90473 Nürnberg (DE); Schimmer, Jürgen, 90473 Nürnberg (DE); Tacke, Dominik, 90562 Heroldsberg (DE)

(57) **Zusammenfassung**

Die Erfindung gibt ein automatisiertes Verfahren zur Steuerung eines Sensornetzes (2) mit Sensorknoten (3) eines technischen Systems (1) an. Das Verfahren weist die folgenden Schritte auf:
- ein Gruppieren (S1) der Sensorknoten (3) in eine erste Gruppe (21) und in eine zweite Gruppe (22),
- ein Schalten (S2) der Sensorknoten (3) der ersten Gruppe (21) in einen ersten Betriebszustand und ein Schalten der Sensorknoten (3) der zweiten Gruppe (22) in einen zweiten Betriebszustand,
- ein Ermitteln von Daten (S3) des technischen Systems (1) durch die Sensorknoten (3) in dem ersten Betriebszustand,
- ein Ermitteln eines Zustands (S4) des technischen Systems (1) aus den Daten und
- in Abhängigkeit des ermittelten Zustands entweder ein Wechseln (S5a) der Sensorknoten (3) der zweiten Gruppe (22) in den ersten Betriebszustand oder ein Beibehalten (S5b) des zweiten Betriebszustandes der Sensorknoten (3) der zweiten Gruppe (22).

Außerdem gibt Sensornetz (2) eines technischen Systems (1) an.

## Beschreibung

### HINTERGRUND DER ERFINDUNG

### Gebiet der Erfindung

Die vorliegende Erfindung gibt ein automatisiertes Verfahren zur Steuerung eines Sensornetzes mit Sensorknoten eines technischen Systems an. Außerdem gibt die Erfindung ein Sensornetz eines technischen Systems an.

### Beschreibung des Stands der Technik

Im Rahmen der Digitalisierung werden zunehmend physikalische Größen von Maschinen und technischen Anlagen erfasst. Die Messung von physikalischen Größen wie Temperatur, Vibration, Druck, Feuchte etc. wird zunehmend durch batteriebetriebene Sensorknoten mit drahtloser Kommunikation (meist Bluetooth Low Energy (BLE)) realisiert. Die Sensorknoten erfassen die Messdaten zyklisch bzw. durch einen von außen einwirkenden Triggerimpuls. In der übrigen Zeit befinden sich die Sensorknoten in einem Ruhezustand, um den Energieverbrauch zu reduzieren und um somit die Lebensdauer der Batterie zu verlängern. Dennoch ist die reale Batterielebensdauer komplexer Sensorknoten selten länger als zwei Jahre. Allerdings ist die Akzeptanz einer häufigen Erneuerung der Batterieversorgung in der Industrie, anders als im Consumer-Markt, nicht vorhanden. Lebensdauern von 5 Jahren oder mehr werden gefordert.

Meist laufen elektrische Anlagen bzw. Maschinen nicht permanent bzw. verharren unverändert für längere Zeit in einem Zustand. Messdaten, welcher in dieser Phase des Maschinenbetriebs aufgezeichnet werden, haben meist einen geringen bzw. keinen nennenswerten Mehrwert, da derselbe Messwert (z.B. Rauschen bei Stillstand) immer wieder aufgezeichnet und übertragen wird. Häufig stellt es sich so dar, dass während Stillstandzeiten (z.B. am Wochenende einer Fertigungsanlage ohne Schichtarbeit) ebenso viele Daten aufgezeichnet werden wie im laufenden Betrieb.

### ZUSAMMENFASSUNG DER ERFINDUNG

Die Aufgabe der Erfindung besteht darin, eine Lösung zur Steuerung eines Sensornetzes eines technischen Systems anzugeben.

Die Erfindung ergibt sich aus den Merkmalen der unabhängigen Ansprüche. Vorteilhafte Weiterbildungen und Ausgestaltungen sind Gegenstand der abhängigen Ansprüche. Weitere Merkmale, Anwendungsmöglichkeiten und Vorteile der Erfindung ergeben sich aus der nachfolgenden Beschreibung.

Ein Aspekt der Erfindung besteht darin, Sensorknoten zu gruppieren und in unterschiedliche Betriebszustände zu schalten. Abhängig vom Betriebszustand können die Sensorknoten verschiedene Aufgaben übernehmen und zur Datenaufzeichnung aktiviert oder deaktiviert sein. Von den aktivierten Sensorknoten ermittelte Daten und sich daraus für das technische System ergebende Zustände, können herangezogen werden, um den Betriebszustand der bislang deaktivierten Sensorknoten zu ändern.

Die Erfindung beansprucht ein automatisiertes Verfahren zur Steuerung eines Sensornetzes mit Sensorknoten eines technischen Systems, mit den Schritten:
- ein Gruppieren der Sensorknoten in eine erste Gruppe und in eine zweite Gruppe,
- ein Schalten der Sensorknoten der ersten Gruppe in einen ersten Betriebszustand und ein Schalten der Sensorknoten der zweiten Gruppe in einen zweiten Betriebszustand,
- ein Ermitteln von Daten des technischen Systems durch die Sensorknoten in dem ersten Betriebszustand,
- ein Ermitteln eines Zustands des technischen Systems aus den Daten und
- in Abhängigkeit des ermittelten Zustands entweder ein Wechseln der Sensorknoten der zweiten Gruppe in den ersten Betriebszustand oder ein Beibehalten des zweiten Betriebszustandes der Sensorknoten der zweiten Gruppe.

Durch eine intelligente Verteilung von Aufgaben (eine Aufgabe kann beispielsweise das Ermitteln von Daten des technischen Systems sein) zwischen mehreren Sensorknoten (den Sensorknoten der ersten Gruppe und den Sensorknoten der zweiten Gruppe), welche sich im selben Sensornetz befinden, kann sich die Lebensdauer des elektrischen Energiespeichers der Sensorknoten entscheidend verlängern lassen.

Dies kann beispielsweise dadurch erreicht werden, dass der erste Betriebszustand und der zweite Betriebszustand unterschiedliche Aufgaben enthalten und beispielsweise durch einen Sensorknoten im ersten Betriebszustand ein Ermitteln von Daten durchgeführt wird und durch die Sensorknoten im zweiten Betriebszustand kein Ermitteln von Daten durchgeführt wird. Der zweite Betriebszustand kann von den Sensorknoten der zweiten Gruppe so lange gehalten werden, bis von dem Sensorknoten im ersten Betriebszustand Daten ermittelt werden, die auf einen bestimmten Zustand, zum Beispiel einen Aktivitätszustand des technischen Systems hinweisen. So lässt sich zum Beispiel das Ermitteln von Daten während zum Beispiel Stillstandzeiten des technischen Systems minimieren, da in Stillstandzeiten nur die Sensorknoten / der Sensorknoten des ersten Betriebszustandes aktiv sind / ist und die Sensorknoten des zweiten Betriebszustandes deaktiviert sind.

Das Verfahren hat den Vorteil, dass es zum Beispiel durch intelligentes Management von Aufgaben der Sensorknoten (zum Beispiel zu erledigende Aufgaben der Sensorknoten der ersten Gruppe / der Sensorknoten im ersten Betriebszustand) und Standby-Zeiten (zum Beispiel deaktivierte Sensorknoten in der zweiten Gruppe / Sensorknoten im zweiten Betriebszustand) zu einer Verlängerung der Batterielebensdauer bzw. zu einer Optimierung des Energieverbrauchs von batteriebetriebenen Sensorknoten führt.

In einer weiteren Ausführung erfolgt das Gruppieren der Sensorknoten in die erste Gruppe und in die zweite Gruppe in Abhängigkeit von Ergebnissen eines Erfassens von Charakteristika.

In einer weiteren Ausführung umfassen die Charakteristika einen Ladungszustand eines elektrischen Energiespeichers der Sensorknoten und/ oder die örtliche Zugänglichkeit der Sensorknoten im Sensornetz.

Dies hat den Vorteil einer intelligenten Auswahl eines Sensorknotens für die erste Gruppe, wobei der Sensorknoten der ersten Gruppe in den ersten Betriebszustand geschalten wird und zum Beispiel das Wiedereinschalten oder die Aktivität des technischen Systems überwacht. Die weiteren Sensorknoten (Sensorknoten der zweiten Gruppe) befinden sich in dem zweiten Betriebszustand, wobei der zweite Betriebszustand ein energiesparender Ruhezustand, in welchem keine (weiteren oder zweite) Daten ermittelt werden, sein kann.

Eine Verwendung des Ladungszustands eines elektrischen Energiespeichers der Sensorknoten hat den Vorteil, dass jeder Sensorknoten, welcher den Ladungszustand seines elektrischen Energiespeichers (zum Beispiel seiner Batterie / seines Ackus) erfassen kann (z.B. durch eine Messung der Batteriespannung), diesen Ladezustand den anderen Sensorknoten im Sensornetz oder einer Gruppierungseinheit mitteilen kann. Daraufhin kann zum Beispiel der Sensorknoten mit dem höchsten Ladungszustand seines elektrischen Energiespeichers in die erste Gruppe gruppiert werden und (zum Beispiel durch eine Schalteinheit) in den ersten Betriebszustand geschalten werden. Der Sensorknoten im ersten Betriebszustand kann beispielsweise das Ermitteln von Daten des technischen Systems übernehmen. Aus den Daten kann ein Zustand des technischen Systems ermittelt werden. Der Zustand kann beispielsweise ein Aktivitätszustand und / oder eine Zustandsänderung des technischen Systems oder einer Maschine des technischen Systems sein und zur Überwachung des technischen Systems verwendet werden.

Alle übrigen Sensorknoten (zum Beispiel Sensorknoten der zweiten Gruppe im zweiten Betriebszustand) minimieren ihre Funktionen (Messen, Datenverarbeitung, ...), um möglichst viel elektrische Energie zu sparen. Bei einer längeren Stillstandzeit des technischen Systems / einer Maschine des technischen Systems können Sensorknoten, welche sich in demselben Sensornetz befinden, abwechselnd das Ermitteln der Daten durchführen und dadurch die Änderung des Zustandes des technischen Systems überwachen (zwischen dem ersten Betriebszustand und dem zweiten Betriebszustand wechseln), um so den Energieverbrauch auf einzelne Sensorknoten optimal zu verteilen. Auch lassen sich gezielt bestimmte Sensorknoten stärker belasten (häufiger in den ersten Betriebszustand schalten) als andere Sensorknoten, da sich die stärker belasteten Sensorknoten beispielsweise an einer leicht zugänglichen Stelle (örtliche Zugänglichkeit) befinden und sich somit einfach warten / elektrisch laden lassen.

Sobald ein Zustand des technischen Systems ermittelt wird, der beispielsweise auf eine Aktivität des technischen Systems hinweist, können die Sensorknoten der zweiten Gruppe aus dem zweiten Betriebszustand ebenfalls in den ersten Betriebszustand geschaltet werden und ebenfalls Daten (weitere / zweite Daten zusätzlich zu den ersten Daten, wobei die weiteren / zweiten Daten gleiche Messgrößen wie die Daten enthalten können) des technischen Systems ermitteln.

Sobald wieder ein Zustand des technischen Systems ermittelt wird, der beispielsweise auf eine Inaktivität des technischen Systems hinweist, können die Sensorknoten der zweiten Gruppe aus dem ersten Betriebszustand wieder zurück in den zweiten Betriebszustand geschaltet werden und keine Daten (weite / zweite Daten) des technischen Systems mehr ermitteln.

In einer weiteren Ausführung weist das erfindungsgemäße Verfahren im Fall des Wechselns der Sensorknoten der zweiten Gruppe in den ersten Betriebszustand die folgenden weiteren Schritte auf:
- ein Senden von ersten Nachrichten durch die Sensorkoten der zweiten Gruppe an die Sensorknoten der ersten Gruppe in zyklischen Zeitabständen,
- ein Empfangen der ersten Nachrichten durch die Sensorknoten der ersten Gruppe,
- ein Senden von zweiten Nachrichten als Antwort auf die erste Nachrichten durch die Sensorknoten der ersten Gruppe an die Sensorknoten der zweiten Gruppe in Abhängigkeit von Ergebnissen des Ermittelns des Zustandes und
- ein Empfangen der zweiten Nachrichten durch die Sensorknoten der zweiten Gruppe,
wobei diese weiteren Schritte vor dem Wechseln der Sensorknoten der zweiten Gruppe in den ersten Betriebszustand stattfinden.

Das hat den Vorteil, dass Sensorknoten der zweiten Gruppe / im zweiten Betriebszustand sich beispielsweise in einem Ruhzustand befinden können und währenddessen in einen sogenannten Advertising Mode übergehen können, in welchen sie zyklisch eine erste Nachricht in die Sensorknoten der ersten Gruppe des Sensornetzes senden und auf eine Antwort in Form einer zweiten Nachricht warten. Diese Antwort / zweite Nachricht kann von dem / den Sensorknoten der ersten Gruppe im ersten Betriebszustand (aktiver Teilnehmer) dazu genutzt werden, um Sensorknoten der zweiten Gruppe im zweiten Betriebszustand (inaktive Sensorknoten) in den ersten Betriebszustand zu schalten und somit zu reaktivieren. Die reaktivierten Sensorknoten unterstützen dann bei dem Ermitteln von Daten (sie ermitteln weitere / zweite Daten).

Bleibt diese Antwort / zweite Nachricht von dem / den Sensorknoten der ersten Gruppe an die Sensorknoten der zweiten Gruppe aus, verbleiben die Sensorknoten der zweiten Gruppe im zweiten Betriebszustand (zum Beispiel in einem Ruhezustand).

Dieser Advertising Mode ist energiesparender als eine von den Sensorknoten der zweiten Gruppe selbst durchgeführte Messung und eine selbst getroffene Entscheidung, ob das technische System und / oder eine Maschine des technischen Systems beispielsweise ihren Betriebszustand gewechselt hat / in einem Zustand ist, der einen Wechsel / ein Umschalten von dem zweiten Betriebszustand in den ersten Betriebszustand begründet.

Ein weiterer Vorteil besteht darin, dass Charakteristika der Sensorknoten / notwendige Informationen z.B. Batterieladezustand, Aufgabenverteilung und Statusinformationen in der Advertising Nachricht versendet werden können. Dadurch entfällt der Aufbau einer Kommunikationsverbindung zwischen den Sensorknoten des Sensornetzes für den Austausch von Basisinformationen.

In einer weiteren Ausführung sind Sensorkoten im zweiten Betriebszustand deaktiviert / in einem Ruhezustand. Das bedeutet, dass die Sensorkoten im zweiten Betriebszustand beispielsweise keine Daten ermitteln und ihre Funktionen / Aufgaben (beispielsweise Ermitteln von Daten, Messen und / oder Datenverarbeitung, ...) minimieren, um elektrische Energie zu sparen.

In einer weiteren Ausführung sind die von den Sensorknoten im ersten Betriebszustand gemessenen / ermittelten Daten Vibration, Temperatur, Druck, Feuchtigkeit, elektrische Spannung, Helligkeit, Lage, elektrischen Strom, visuelle Bilder und / oder magnetischen Fluss betreffende Messwerte.

In einer weiteren Ausführung ist der Zustand des technischen Systems ein Aktivitätszustand (ist das technische System aktiv oder nicht) und / oder ein Lastzustand (wie aktiv bzw. wie ausgelastet ist das technische System) und / oder eine Zustandsänderung.

Durch die Verarbeitung der durch die Sensorknoten im ersten Betriebszustand ermittelten Daten und das Ermitteln des Zustandes des technischen Systems durch eine Ermittlungseinheit ist beispielsweise zu erkennen, wann das technische System und / oder eine Maschine des technischen Systems ein- bzw. ausgeschalten (Aktivitätszustand) ist. Wird ein "Aus"-Zustand erkannt, müssen folglich nicht alle Sensorknoten in einem gleichbleibenden Zyklus abgefragt werden / Daten ermitteln, sondern lediglich ein einzelner geeigneter Sensorknoten (ein Sensorknoten im ersten Betriebszustand), welcher zum Beispiel ein Wiedereinschalten (Aktivitätszustand) des technischen Systems oder eine Zustandsänderung (Lastzustand) des technischen Systems erkennt und daraufhin auch die Sensorknoten des zweiten Betriebszustandes in den ersten Betriebszustand geschalten werden / wechseln und bei dem Ermitteln von Daten (zweiten Daten) des technischen Systems unterstützen.

In einer weiteren Ausführung weist das technische System Maschinen auf.

In einer weiteren Ausführung werden von den Sensorknoten erfasste Daten von mindestens einer Datenverarbeitungseinheit verarbeitet.

In einer weiteren Ausführung ist die Datenverarbeitungseinheit in den Sensorknoten oder einer externen Recheneinheit ausgebildet.

Dabei ist die Datenverarbeitung direkt im Sensorknoten energiesparender als Rohdaten der Messungen / des Ermittelns von Daten über eine Funkverbindung an eine externe Recheneinheit (zum Beispiel einen Rechner oder eine Cloud) / Ermittlungseinheit zu übertragen, welche das Ermitteln des Zustandes des technischen Systems übernehmen würde.

In einer weiteren Ausführung werden die von den Sensorknoten im ersten Betriebszustand ermittelten Daten mit Verfahren maschinellen Lernens analysiert und Prognosen über künftige Zustände des technischen Systems und / oder Komponenten des technischen Systems erstellt.

In einer weiteren Ausführung werden zeitliche Intervalle für das Ermittelns von Daten des technischen Systems durch die Sensorknoten im ersten Betriebszustand unter Bezugnahme der Prognosen definiert.

Eine Erweiterung stellen Verfahren maschinellen Lernens (zum Beispiel Musteranalyse) vergangener / vorheriger ermittelter Daten dar. So ist es möglich, eine Prognose über zum Beispiel künftige Aktivitätszustände / "Aus"-Zustände des technischen Systems / einer elektrischen Maschine / einer technischen Anlage vorauszusagen und diese mit einer Wahrscheinlichkeit / einem prozentualen Erwartungswert zu versehen. Abhängig von der Wahrscheinlichkeit / dem prozentualen Erwartungswert eines zukünftigen "Aus"-Zustandes können Messintervalle / Intervalle des Ermittelns von Daten durch Sensorknoten im ersten Betriebszustand vergrößert werden. Dies führt zu einer Reduzierung des Energieverbrauchs bei gleichbleibender Aussagekraft der Messwerte / ermittelten Daten.

In einer weiteren Ausführung werden die Daten an eine zentrale Datenbank (in einer Cloud oder on premise) übertragen.

Abhängig von der Wahrscheinlichkeit / dem prozentualen Erwartungswert eines zukünftigen "Aus"-Zustandes kann eine Häufigkeit von Übertragungen an eine zentrale Datenbank, ob in einer Cloud oder on premise, verringert werden. Auch dies führt zu einer Reduzierung des Energieverbrauchs bei gleichbleibender Aussagekraft der Messwerte / ermittelten Daten.

Die Erfindung beansprucht außerdem ein Sensornetz eines technischen Systems, aufweisend:
- Sensorknoten, aufweisend Sensoren,
- eine Gruppierungseinheit, wobei die Gruppierungseinheit für ein Gruppieren der Sensorknoten in eine erste Gruppe und in eine zweite Gruppe ausgebildet ist,
- eine Schalteinheit, wobei die Schalteinheit für ein Schalten der Sensorknoten der ersten Gruppe in einen ersten Betriebszustand und ein Schalten der Sensorknoten der zweiten Gruppe in einen zweiten Betriebszustand ausgebildet ist, wobei die Sensorknoten in dem ersten Betriebszustand Daten des technischen Systems ermitteln,
- eine Ermittlungseinheit, wobei die Ermittlungseinheit für ein Ermitteln eines Zustands des technischen Systems aus den Daten ausgebildet ist, und
- eine Wechseleinheit, wobei die Wechseleinheit ausgebildet ist, in Abhängigkeit des ermittelten Zustands entweder ein Wechseln der Sensorknoten der zweiten Gruppe in den ersten Betriebszustand oder ein Beibehalten des zweiten Betriebszustandes der Sensorknoten der zweiten Gruppe durchzuführen.

Die Gruppierungseinheit kann eine Logik sein, die abhängig von vorherigen Entscheidungen Sensorknoten in unterschiedliche Gruppen (erste Gruppe, zweite Gruppe) einteilt.

Die Schalteinheit kann eine abstrakte Einheit, beispielsweise ein Relais oder eine Softwarekomponente sein, welche auf jedem Sensorknoten implementiert ist, um die Sensorknoten einzeln in einen der beiden Betriebszuständen (erste Betriebszustand, zweiter Betriebszustand) zu versetzen.

Die Ermittlungseinheit ist für die Verarbeitung der Daten / Post-processing durch beispielsweise Logik und / oder Algorithmen ausgebildet.

Die Schalteinheit kann den initialen Zustand der beiden Gruppen (erste Gruppe, zweite Gruppe) festlegen und die Wechseleinheit im Anschluss in Abhängigkeit des Zustandes des technischen Systems den Betriebszustand (erste Betriebszustand, zweite Betriebszustand) der Sensorknoten ändern. Die Schalteinheit kann auch gleich der Wechseleinheit / in einer gemeinsamen Einheit ausgebildet sein.

In einer weiteren Ausführung ist das Sensornetz ausgebildet ein erfindungsgemäßes Verfahren durchzuführen.

Die Erfindung bietet den Vorteil, dass in einem Sensornetz Energiesparmaßnahmen getroffen werden können, ohne dass dabei auf Informationen wichtiger Messdaten / ermittelter Daten verzichtet wird.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand von schematischen Zeichnungen ersichtlich.

Es zeigen
- Fig. 1: ein Ablaufdiagramm des Verfahrens zur Steuerung eines Sensornetzes mit Sensorknoten eines technischen Systems,
- Fig. 2: ein Sensornetz eines technischen Systems und
- Fig. 3: ein Sensornetz mit Sensorknoten und deren Charakteristika.

### DETAILLIERTE BESCHREIBUNG DER ERFINDUNG

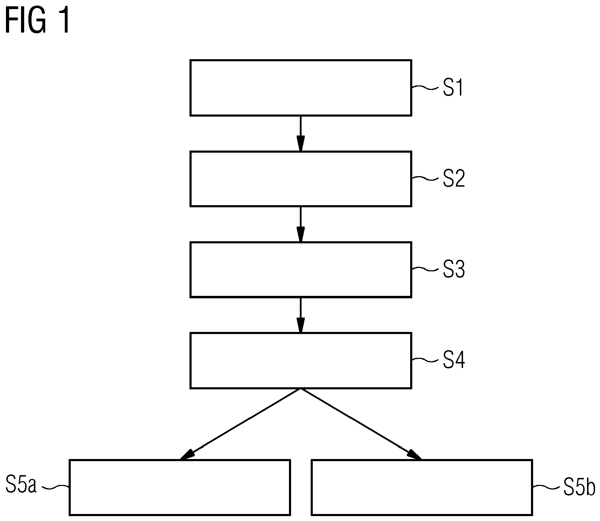

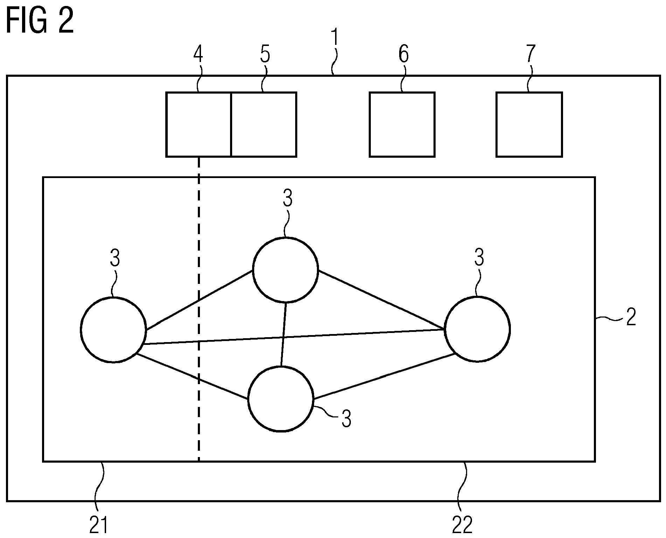

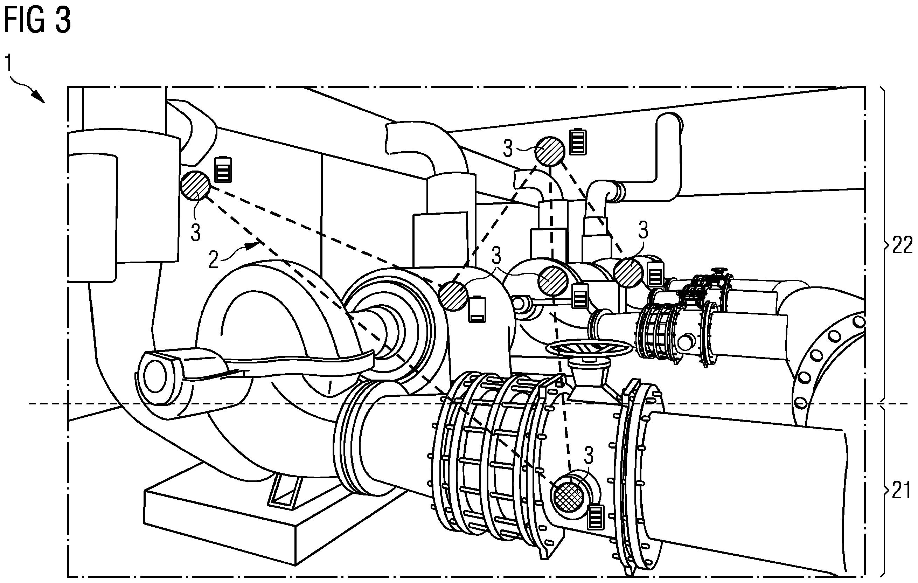

Fig. 1 zeigt ein Ablaufdiagramm des automatisierten Verfahrens zur Steuerung eines Sensornetzes 2 (dargestellt in Fig. 2 und Fig. 3) mit Sensorknoten 3 (dargestellt in Fig. 2 und Fig. 3) eines technischen Systems 1 (dargestellt in Fig. 2 und Fig. 3).

Das Verfahren weist die folgenden Schritte auf:
- Erster Schritt S1: Ein Gruppieren der Sensorknoten 3 in eine erste Gruppe 21 (dargestellt in Fig. 2 und Fig. 3) und in eine zweite Gruppe 22 (dargestellt in Fig. 2 und Fig. 3),
- Zweiter Schritt S2: Ein Schalten der Sensorknoten 3 der ersten Gruppe 21 in einen ersten Betriebszustand und ein Schalten der Sensorknoten 3 der zweiten Gruppe 22 in einen zweiten Betriebszustand,
- Dritter Schritt S3: Ein Ermitteln von Daten des technischen Systems 1 durch die Sensorknoten 3 in dem ersten Betriebszustand,
- Vierter Schritt S4: Ein Ermitteln eines Zustands des technischen Systems 1 aus den Daten und
- in Abhängigkeit des ermittelten Zustands entweder:
   - Fünfter Schritt, Variante a S5a: Ein Wechseln der Sensorknoten 3 der zweiten Gruppe 22 in den ersten Betriebszustand oder
   - Fünfter Schritt, Variante b S5b: Ein Beibehalten des zweiten Betriebszustandes der Sensorknoten 3 der zweiten Gruppe 22.

Fig. 2 zeigt ein Sensornetz 2 eines technischen Systems 1. Das Sensornetz 2 weist die folgenden Bestandteile auf:
- Sensorknoten 3,
- eine Gruppierungseinheit 4, wobei die Gruppierungseinheit 4 für ein Gruppieren S1 der Sensorknoten 3 in eine erste Gruppe 21 und in eine zweite Gruppe 22 ausgebildet ist,
- eine Schalteinheit 5, wobei die Schalteinheit 5 für ein Schalten der Sensorknoten 3 der ersten Gruppe 21 in einen ersten Betriebszustand und ein Schalten S2 der Sensorknoten 3 der zweiten Gruppe 22 in einen zweiten Betriebszustand ausgebildet ist,
wobei die Sensorknoten 3 in dem ersten Betriebszustand Daten des technischen Systems 1 ermitteln S3,
- eine Ermittlungseinheit 6, wobei die Ermittlungseinheit 6 für ein Ermitteln (S4) eines Zustands des technischen Systems 1 aus den Daten ausgebildet ist, und
- eine Wechseleinheit 7, wobei die Wechseleinheit 7 ausgebildet ist, in Abhängigkeit des ermittelten Zustands entweder ein Wechseln S5a der Sensorknoten 3 der zweiten Gruppe 22 in den ersten Betriebszustand oder ein Beibehalten S5b des zweiten Betriebszustandes der Sensorknoten 3 der zweiten Gruppe 22 durchzuführen.

Fig. 3 zeigt ein Sensornetz 2 mit Sensorknoten 3 und Charakteristika der Sensorknoten 3.

Das Gruppieren der Sensorknoten 3 in die erste Gruppe 21 und in die zweite Gruppe 22 kann in Abhängigkeit von Ergebnissen eines Erfassens von Charakteristika erfolgen.

Die Charakteristika können einen Ladungszustand eines elektrischen Energiespeichers der Sensorknoten 3 und/ oder die örtliche Zugänglichkeit der Sensorknoten 3 im Sensornetz 2 umfassen.

Dies hat den Vorteil einer intelligenten Auswahl eines Sensorknotens 3 für die erste Gruppe 21, wobei der Sensorknoten 3 der ersten Gruppe 21 in den ersten Betriebszustand geschalten wird und zum Beispiel das Wiedereinschalten oder die Aktivität des technischen Systems 1 überwacht. Die weiteren Sensorknoten 3 (Sensorknoten 3 der zweiten Gruppe 22) können sich in dem zweiten Betriebszustand befinden, wobei der zweite Betriebszustand ein energiesparender Ruhezustand, in welchem keine (zweiten) Daten ermittelt werden, sein kann.

Eine Verwendung des Ladungszustand eines elektrischen Energiespeichers der Sensorknoten 3 (siehe Batteriesymbole in Fig. 3) hat den Vorteil, dass jeder Sensorknoten 3, welcher den Ladungszustand seines elektrischen Energiespeichers (zum Beispiel seiner Batterie / seines Akkus) erfassen kann (z.B. durch eine Messung der Batteriespannung), diesen Ladezustand den anderen Sensorknoten 3 im Sensornetz 2 oder einer Gruppierungseinheit 4 (dargestellt in Fig. 2) mitteilen kann. Daraufhin kann zum Beispiel der Sensorknoten 3 mit der größten Restlebensdauer / Ladungszustand seiner Batterie / seines elektrischen Energiespeichers in die erste Gruppe gruppiert werden und (zum Beispiel durch eine Schalteinheit) in den ersten Betriebszustand geschalten werden.

Haben mehrere Sensorknoten 3 einen Energiespeicher mit maximalem Ladungszustand (in Fig. 3 die Sensorknoten 3 oben rechts und unten rechts), können weitere Charakteristika einbezogen werden. Auch lassen sich gezielt bestimmte Sensorknoten 3 stärker belasten (häufiger in den ersten Betriebszustand schalten) als andere Sensorknoten 3, da sich die stärker belasteten Sensorknoten beispielsweise an einer leicht zugänglichen Stelle (örtliche Zugänglichkeit) befinden und sich somit einfach warten / elektrisch laden lassen. So wurde in Fig. 3 der Sensorknoten unten rechts (gekreuzt schraffiert) ausgewählt, um in die erste Gruppe 21 gruppiert und in den ersten Betriebszustand geschalten zu werden, die weiteren Sensorknoten (parallel gestreift schraffiert) wurden in die zweite Gruppe 22 gruppiert und in den zweiten Betriebszustand geschalten.

Der Sensorknoten 3 im ersten Betriebszustand kann beispielsweise das Ermitteln von Daten S3 des technischen Systems 1 übernehmen. Aus den Daten kann ein Zustand des technischen Systems ermittelt werden S4. Der Zustand kann beispielsweise ein Aktivitätszustand und / oder ein Lastzustand des technischen Systems 1 oder einer Maschine des technischen Systems 1 sein und zur Überwachung des technischen Systems 1 verwendet werden.

Alle übrigen Sensorknoten 3 (zum Beispiel Sensorknoten 3 der zweiten Gruppe 22 im zweiten Betriebszustand, in Fig. 3 parallel gestreift schraffiert) minimieren ihre Funktionen (Messen, Datenverarbeitung, ...), um möglichst viel elektrische Energie zu sparen. Bei einer längeren Stillstandzeit des technischen Systems 1 / einer Maschine des technischen Systems 1 können Sensorknoten 3, welche sich in demselben Sensornetz 2 befinden, abwechselnd das ermitteln der Daten S3 durchführen und dadurch die Änderung des Zustandes des technischen Systems 1 überwachen (zwischen dem ersten Betriebszustand und dem zweiten Betriebszustand wechseln), um so den Energieverbrauch auf einzelne Sensorknoten 3 optimal zu verteilen.

Sobald ein Zustand des technischen Systems 1 ermittelt wird S4, der beispielsweise auf eine Aktivität des technischen Systems 1 hinweist, können die Sensorknoten 3 der zweiten Gruppe 22 aus dem zweiten Betriebszustand ebenfalls in den ersten Betriebszustand geschaltet werden S5a und ebenfalls Daten (weitere / zweite Daten) des technischen Systems ermitteln.

Sobald wieder ein Zustand des technischen Systems 1 ermittelt wird S4, der beispielsweise auf eine Inaktivität des technischen Systems 1 hinweist, können die Sensorknoten der zweiten Gruppe 22 aus dem ersten Betriebszustand wieder zurück in den zweiten Betriebszustand geschaltet werden und keine Daten (weitere / zweite Daten) des technischen Systems 1 mehr ermitteln.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

### Bezugszeichenliste

- 1: technisches System
- 2: Sensornetz
- 3: Sensorknoten
- 4: Gruppierungseinheit
- 5: Schalteinheit
- 6: Ermittlungseinheit
- 7: Wechseleinheit

- 21: erste Gruppe
- 22: zweite Gruppe

- S1: erster Schritt
- S2: zweiter Schritt
- S3: dritter Schritt
- S4: vierter Schritt
- S5a: fünfter Schritt, Variante a
- S5b: fünfter Schritt, Variante b

## Patentansprüche

1. Automatisiertes Verfahren zur Steuerung eines Sensornetzes (2) mit Sensorknoten (3) eines technischen Systems (1), **mit den Schritten:**
- ein Gruppieren (S1) der Sensorknoten (3) in eine erste Gruppe (21) und in eine zweite Gruppe (22),
- ein Schalten (S2) der Sensorknoten (3) der ersten Gruppe (21) in einen ersten Betriebszustand und ein Schalten der Sensorknoten (3) der zweiten Gruppe (22) in einen zweiten Betriebszustand,
- ein Ermitteln von Daten (S3) des technischen Systems (1) durch die Sensorknoten (3) in dem ersten Betriebszustand,
- ein Ermitteln eines Zustands (S4) des technischen Systems (1) aus den Daten und
- in Abhängigkeit des ermittelten Zustands entweder ein Wechseln (S5a) der Sensorknoten (3) der zweiten Gruppe (22) in den ersten Betriebszustand oder ein Beibehalten (S5b) des zweiten Betriebszustandes der Sensorknoten (3) der zweiten Gruppe (22).

2. Verfahren nach Anspruch 1,
**wobei** das Gruppieren der Sensorknoten (3) in die erste Gruppe (21) und in die zweite Gruppe (22) in Abhängigkeit von Ergebnissen eines Erfassens von Charakteristika erfolgt.

3. Verfahren nach Anspruch 2,
**wobei** die Charakteristika einen Ladungszustand eines elektrischen Energiespeichers der Sensorknoten (3) und/ oder die örtliche Zugänglichkeit der Sensorknoten (3) im Sensornetz (2) umfassen.

4. Verfahren nach einem der vorhergehenden Ansprüche,
im Fall des Wechselns (S4a) der Sensorknoten (3) der zweiten Gruppe (2) in den ersten Betriebszustand **mit den weiteren Schritten:**
- ein Senden von ersten Nachrichten durch die Sensorkoten (3) der zweiten Gruppe (22) an die Sensorknoten (3) der ersten Gruppe (21) in zyklischen Zeitabständen,
- ein Empfangen der ersten Nachrichten durch die Sensorknoten (3) der ersten Gruppe (21),
- ein Senden von zweiten Nachrichten als Antwort auf die erste Nachrichten durch die Sensorknoten (3) der ersten Gruppe (21) an die Sensorknoten (3) der zweiten Gruppe (22) in Abhängigkeit von Ergebnissen des Ermittelns des Zustandes und
- ein Empfangen der zweiten Nachrichten durch die Sensorknoten (3) der zweiten Gruppe (22),
**wobei** die weiteren Schritte nach diesem Anspruch vor dem Wechseln (S4a) der Sensorknoten (3) der zweiten Gruppe (22) in den ersten Betriebszustand stattfinden.

5. Verfahren nach einem der vorhergehenden Ansprüche,
**wobei** die Sensorkoten (3) im zweiten Betriebszustand deaktiviert sind.

6. Verfahren nach einem der vorhergehenden Ansprüche,
**wobei** die Daten Vibration, Temperatur, Druck, Feuchtigkeit, elektrische Spannung, Helligkeit, Lage, elektrischen Strom, visuelle Bilder und / oder magnetischen Fluss betreffende Messwerte sind.

7. Verfahren nach einem der vorhergehenden Ansprüche,
**wobei** der Zustand des technischen Systems (1) ein Aktivitätszustand und / oder ein Lastzustand und / oder eine Zustandsänderung ist.

8. Verfahren nach einem der vorhergehenden Ansprüche,
**wobei** das technische System (1) Maschinen aufweist.

9. Verfahren nach einem der vorhergehenden Ansprüche,
**wobei** von den Sensorknoten (3) erfasste Daten von mindestens einer Datenverarbeitungseinheit verarbeitet werden.

10. Verfahren nach Anspruch 9,
**wobei** die Datenverarbeitungseinheit in den Sensorknoten oder einer externen Recheneinheit ausgebildet ist.

11. Verfahren nach einem der vorhergehenden Ansprüche,
**wobei** die Daten mit Verfahren maschinellen Lernens analysiert werden und Prognosen über künftige Zustände des technischen Systems (1) und / oder Komponenten des technischen Systems (1) erstellt werden.

12. Verfahren nach Anspruch 11,
**wobei** zeitliche Intervalle für das Ermittelns von Daten des technischen Systems (1) durch die Sensorknoten im ersten Betriebszustand unter Bezugnahme der Prognosen definiert werden.

13. Verfahren nach einem der vorhergehenden Ansprüche,
**wobei** die Daten an eine zentrale Datenbank übertragen werden.

14. Sensornetz (2) eines technischen Systems (1), **aufweisend:**
- Sensorknoten (3), aufweisend Sensoren,
- eine Gruppierungseinheit (4), wobei die Gruppierungseinheit (4) für ein Gruppieren (S1) der Sensorknoten (3) in eine erste Gruppe (21) und in eine zweite Gruppe (22) ausgebildet ist,
- eine Schalteinheit (5), wobei die Schalteinheit (5) für ein Schalten der Sensorknoten (3) der ersten Gruppe (21) in einen ersten Betriebszustand und ein Schalten (S2) der Sensorknoten (3) der zweiten Gruppe (22) in einen zweiten Betriebszustand ausgebildet ist,
wobei die Sensorknoten (3) in dem ersten Betriebszustand Daten des technischen Systems (1) ermitteln (S3),
- eine Ermittlungseinheit (6), wobei die Ermittlungseinheit (6) für ein Ermitteln (S4) eines Zustands des technischen Systems (1) aus den Daten ausgebildet ist, und
- eine Wechseleinheit (7), wobei die Wechseleinheit (7) ausgebildet ist, in Abhängigkeit des ermittelten Zustands entweder ein Wechseln (S5a) der Sensorknoten (3) der zweiten Gruppe (22) in den ersten Betriebszustand oder ein Beibehalten (S5b) des zweiten Betriebszustandes der Sensorknoten (3) der zweiten Gruppe (22) durchzuführen.

15. Sensornetz (2) nach Anspruch 14, ausgebildet zur Durchführung eines Verfahrens nach einem der Ansprüche 1 bis 13.
